# EUROPEAN PATENT APPLICATION

(11) **EP 4 701 298 A1**
(43) Date of publication of application: **25.02.2026**
(21) Application number: 23936458.1
(22) Date of filing: 08.12.2023
(51) Int. Cl.: H04W 72/0446

(54) **SENSING SIGNAL TRANSMISSION METHOD, ELECTRONIC DEVICE, AND STORAGE MEDIUM**

(30) Priority: 08.05.2023 CN 202310511666
(71) Applicant: ZTE CORPORATION, Shenzhen, Guangdong 518057 (CN)
(72) Inventor: ZHANG, Yujie, Shenzhen, Guangdong 518057 (CN); HUANG, Jun, Shenzhen, Guangdong 518057 (CN); MA, Cong, Shenzhen, Guangdong 518057 (CN); CHEN, Dawei, Shenzhen, Guangdong 518057 (CN); CHEN, Shijun, Shenzhen, Guangdong 518057 (CN); XIA, Shuqiang, Shenzhen, Guangdong 518057 (CN); LIN, Xu, Shenzhen, Guangdong 518057 (CN)
(74) Representative: Ziebig Hengelhaupt Intellectual Property Attorneys Patentanwaltskanzlei PartGmbB
(86) International application number: PCT/CN2023/137543
(87) International publication number: WO 2024/230154

(57) **Abstract**

The present application belongs to the technical field of communications. Disclosed are a sensing signal transmission method, an electronic device, and a storage medium. The transmission method comprises: transmitting a sequence of sensing signals by means of at least two first orthogonal frequency division multiplexing (OFDM) symbols in a signal sequence, wherein the at least two first OFDM symbols are prior to a second OFDM symbol in the signal sequence, there is no second OFDM symbol between the at least two first OFDM symbols, the first OFDM symbols are used for performing downlink sending or performing switching between downlink transmission and uplink transmission, and the second OFDM symbol is used for performing uplink reception.

## Description

### CROSS-REFERENCE TO RELATED APPLICATIONS

The present disclosure claims priority to the Chinese patent application No. 202310511666.2 filed on May 8, 2023 to the China Patent Office, and entitled "SENSING SIGNAL TRANSMISSION METHOD, ELECTRONIC DEVICE, AND STORAGE MEDIUM", and the entire content of this application is incorporated in the present disclosure by reference.

### TECHNICAL FIELD

The present application belongs to the technical field of communications, and specifically relates to a sensing signal transmission method, an electronic device, and a storage medium.

### BACKGROUND

With the rapid development of mobile communication technology, services enabled by mobile communication systems continue to extend to vertical industries. Integrated sensing and communication has become an important direction for the evolution of 5th generation mobile communication technology advanced (5G-Advanced). Sensing refers to transmitting of sensing signals to sensed objects and receiving of echoes to obtain information about the sensed objects, such as radar speed measurement, and sonar distance measurement. Integrated sensing and communication is an information processing technology that simultaneously realizes sensing and communication functions, which can effectively improve the system spectrum efficiency and information processing efficiency.

In the related art, modules for processing sensing signals need to be added to a communication system. For example, a beam management module is added to a transmitter of the communication system to achieve the transmitting of the sensing signals, and a sensing module is added to a receiver to achieve the reception of the sensing signals, which cannot achieve efficient coexistence of communication signals and the sensing signals.

### SUMMARY

Objectives of embodiments of the present application are to provide a sensing signal transmission method, an electronic device, and a storage medium, which can achieve integrated sensing and communication in a frame structure of communication signals and achieve efficient coexistence of the communication signals and sensing signals.

In order to solve the above technical problems, the present application is implemented as follows.

In a first aspect, an embodiment of the present application provides a sensing signal transmission method, including: transmitting a sequence of sensing signals by means of at least two first orthogonal frequency division multiplexing (OFDM) symbols in a signal sequence, wherein the at least two first OFDM symbols are prior to a second OFDM symbol in the signal sequence, and there is no second OFDM symbol between the at least two first OFDM symbols; the first OFDM symbols are used for performing downlink transmission or performing switching between downlink transmission and uplink transmission; and the second OFDM symbol is used for performing uplink reception.

In a second aspect, an embodiment of the present application provides a sensing signal transmission method, including: receiving a sequence of sensing signals from a transmitter by means of at least two second orthogonal frequency division multiplexing (OFDM) symbols in a signal sequence, wherein the at least two second OFDM symbols are located after a third OFDM symbol in the signal sequence; the third OFDM symbol is used for performing switching between downlink transmission and uplink transmission; and the second OFDM symbols are used for performing uplink reception.

In a third aspect, an embodiment of the present application provides an electronic device, the electronic device includes a processor and a memory, the memory stores a program or instruction runnable on the processor, and the program or the instruction, when executed by the processor, implements the steps of the sensing signal transmission method as described in the first aspect or the second aspect.

In a fourth aspect, an embodiment of the present application provides a readable storage medium. The readable storage medium has a program or instruction stored thereon, and the program or the instruction, when executed by a processor, implements the steps of the sensing signal transmission method as described in the first aspect or the second aspect.

### BRIEF DESCRIPTION OF DRAWING(S)

To illustrate the technical solutions in embodiments of the present application or in the prior art more clearly, the accompanying drawings required for describing the embodiments or the prior art will be briefly introduced below. Apparently, the accompanying drawings in the following description are only some embodiments recorded in the present application, and a person of ordinary skill in the art may still derive other accompanying drawings from these accompanying drawings without creative efforts.
FIG. 1 is a schematic structural diagram of a communication system provided by embodiments of the present application.
FIG. 2 is a schematic flowchart of a sensing signal transmission method provided by embodiments of the present application.
FIG. 3 is a schematic flowchart of another sensing signal transmission method provided by embodiments of the present application.
FIG. 4 is a schematic flowchart of another sensing signal transmission method provided by embodiments of the present application.
FIG. 5 is a schematic diagram of transmission signal timing provided by embodiments of the present application.
FIG. 6 is a schematic diagram of a symbol sequence provided by embodiments of the present application.
FIG. 7 is a schematic diagram of another symbol sequence provided by embodiments of the present application.
FIG. 8 is a schematic diagram of another symbol sequence provided by embodiments of the present application.
FIG. 9 is a schematic diagram of another sensing signal transmission timing provided by embodiments of the present application.
FIG. 10 is a schematic diagram of another symbol sequence provided by embodiments of the present application.
FIG. 11 is a schematic structural diagram of a sensing signal transmission apparatus provided by embodiments of the present application.
FIG. 12 is a schematic structural diagram of another sensing signal transmission apparatus provided by embodiments of the present application.
FIG. 13 is a schematic structural diagram of an electronic device provided by embodiments of the present application.
FIG. 14 is a schematic structural diagram of a network side device provided by embodiments of the present application.

### DETAILED DESCRIPTION

The technical solutions in the embodiments of the present application will be clearly described in the following with reference to the accompanying drawings in the embodiments of the present application. Apparently, the described embodiments are some rather than all of the embodiments of the present application. All other embodiments obtained by persons of ordinary skills in the art based on the embodiments in the present application fall within the scope of protection of the present application.

The terms "first," "second" and the like in the specification and claims of the present application are used for distinguishing similar objects, but are not used for describing a specific sequence or precedence order. It should be understood that data used in this way are exchangeable in a proper case, so that the embodiments of the present application may be implemented in an order different from the order shown or described herein. Moreover, the objects distinguished by "first" and "second" are usually of the same class and do not limit the number of objects. For example, a first object may be one or more. In addition, "and/or" in the specification and the claims represents at least one of the connected objects. A character "/" generally represents that the previous and next association objects are in an "or" relationship.

A signal transmission method provided by embodiments of the present application is illustrated below in detail through specific embodiments and their application scenarios with reference to the accompanying drawings.

It is worth pointing out that technologies described in the embodiments of the present application are not limited to a long term evolution (LTE)/LTE-advanced (LTE-A) system, and may further be applied to other wireless communication systems such as code division multiple access (CDMA), time division multiple access (TDMA), frequency division multiple access (FDMA), orthogonal frequency division multiple access (OFDMA), single-carrier frequency-division multiple access (SC-FDMA), or other systems. The terms "system" and "network" described in the embodiment of the present application are often interchangeably used, and the described technologies may be used not only for the systems and radio technologies mentioned above, but also for other systems and radio technologies. The following description describes a new radio (New Radio, NR) system for an example purpose, and the term NR is used in most of the following descriptions. However, these technologies may also be applied to systems other than an NR system, such as a 6th generation (6G) communication system.

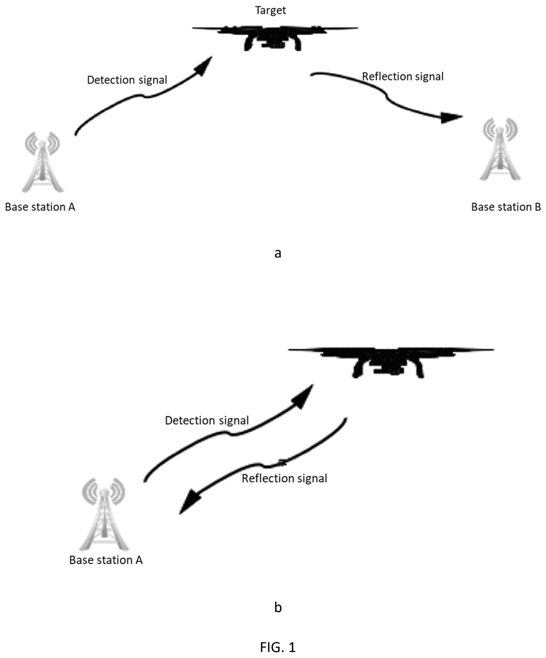

FIG. 1 shows a schematic diagram of two wireless communication systems to which embodiments of the present application is applicable. The wireless communication system includes a transmitter 11 and a receiver 12. The transmitter 11 is configured to provide communication services and transmit sensing signals, and the receiver 12 is configured to provide communication services and receive sensing signals. Referring to FIG. 1a, the transmitter 11 and the receiver 12 may be different network side devices or antenna channels of different parts of the same network side device (refer to FIG. 1b). The network side device may include an access network device or a core network device, wherein the access network device may also be referred to as a radio access network (RAN) device, a radio access network function, or a radio access network unit. The access network device may include a base station, a wireless local area network (WLAN) access point (AS), or a wireless fidelity (WiFi) node, etc. The base station may be referred to as a node B (NB), an evolved node B (eNB), the next generation node B (gNB), a new radio node B (NR Node B), an access point, a relay base station (RBS), a serving base station (SBS), a base transceiver station (BTS), a radio base station, a radio transceiver, a basic service set (BSS), an extended service set (ESS), a home node B (HNB), a home evolved node B, a transmission reception point (TRP) or any other suitable term in the field. As long as the same technical effect is achieved, the base station is not limited to specific technical vocabulary. It should be noted that in the embodiment of the present application, only the base station in the NR system is introduced as an example, and the specific type of the base station is not limited.

The core network device may include, but is not limited to, at least one of the following: a core network node, a core network function, a mobility management entity (MME), an access and mobility management function (AMF), a session management function (SMF), a user plane function (UPF), a policy control function (PCF), a policy and charging rules function (PCRF), an edge application server discovery function (EASDF), unified data management (UDM), unified data repository (UDR), a home subscriber server (HSS), a centralized network configuration (CNC), a network repository function (NRF), a network exposure function (NEF), a local NEF (L-NEF), a binding support function (BSF), an application function (AF), etc. It should be noted that in the embodiment of the present application, only the core network device in the NR system is introduced as an example, and the specific type of the core network device is not limited. However, the core network device is not limited to at least one of the following: a core network node, a core network function, a mobility management entity (MME), an access and mobility management function (AMF), a session management function (SMF), a user plane function (UPF), a policy control function (PCF), a policy and charging rules function (PCRF), an edge application server discovery function (EASDF), unified data management (UDM), unified data repository (UDR), a home subscriber server (HSS), a centralized network configuration (CNC), a network repository function (NRF), a network exposure function (NEF), a local NEF (L-NEF), a binding support function (BSF), an application function (AF), etc. It should be noted that in the embodiment of the present application, only the core network device in the NR system is introduced as an example, and the specific type of the core network device is not limited.

Communication services are user-oriented services, and mainly include analog and digital video-audio services, data communication services, multimedia communication services, etc. The communication services have a wide range of applications, specifically including domestic long-distance and local telephone of a fixed network, mobile network telephone, satellite communication, satellite mobile communication, Internet and other public data transmission.

Sensing signals are used for sensing target objects or environmental information. For example, a base station transmits sensing signals to a target object, and a distance, position, or volume of the target object is sensed by means of echo signals reflected by the target object based on the sensing signals.

Integrated sensing and communication refers to integration of communication and sensing functions, so that a communication system has both communication and sensing functions simultaneously. While transmitting information through a wireless channel, the communication system actively recognizes and analyzes characteristics of the channel to sense physical characteristics of the surrounding environment. Communication and sensing functions complement each other. The former may achieve the sharing of sensing information, transmission of sensing signals, etc. The latter refers to the ability to reduce the overheads of beam training and the recovery time of communication interruptions by sensing the surrounding environment. For example, in a scenario of the Internet of Vehicles, integrated sensing and communication may achieve recognition and sensing of the road itself and road environment, recognize positions, speeds, and directions of motion of vehicles, and achieve communication between the vehicles and between the vehicles and infrastructure.

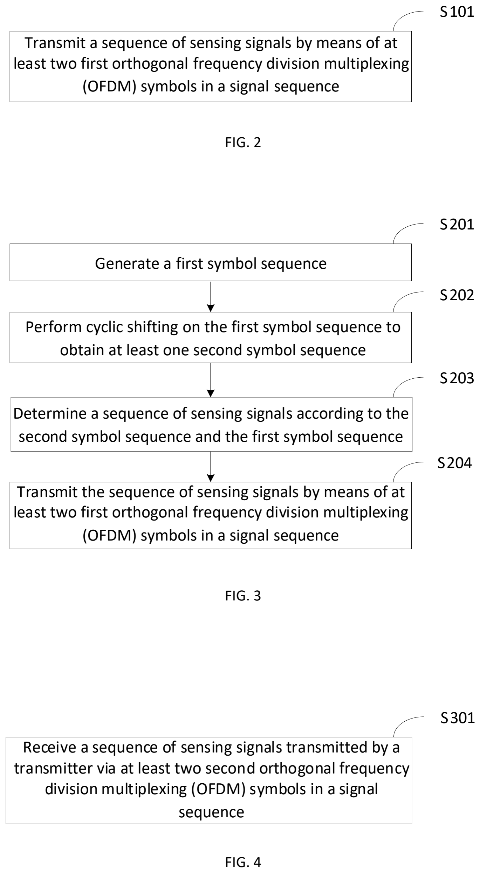

FIG. 2 shows a schematic flowchart of a sensing signal transmission method provided by embodiments of the present application. The method may be performed by a transmitter. As shown in FIG. 2, the method may include the following steps.

At S101, a sequence of sensing signals is transmitted by means of at least two first orthogonal frequency division multiplexing (OFDM) symbols in a signal sequence.

The at least two first OFDM symbols are prior to a second OFDM symbol in the signal sequence, and there is no second OFDM symbol between the at least two first OFDM symbols. The first OFDM symbols are used for performing downlink transmission or performing switching between downlink transmission and uplink transmission, and the second OFDM symbol is used for performing uplink reception.

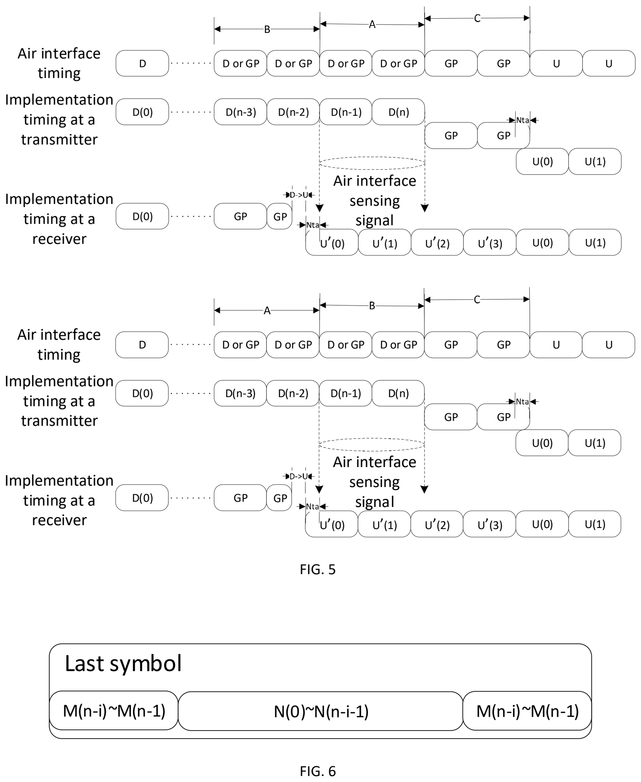

In some cases, FIG. 5 shows a schematic diagram of a transmission signal sequence. Referring to FIG. 5, the transmitter transmits the sequence of sensing signals by means of at least two first OFDM symbols corresponding to a position A of the signal sequence, namely D(n-3) and D(n-2) symbols. The transmitter performs switching between uplink transmission and downlink transmission at the second OFDM symbol (namely, a GP symbol) corresponding to a position B after the position A. When there is no second OFDM symbol between the at least two first OFDM symbols corresponding to the position A, that is, when the sequence of sensing signals is transmitted at the at least two first OFDM symbols corresponding to the position A, the transmitter does not perform switching between uplink transmission and downlink transmission. Switching between uplink transmission and downlink transmission is controlled by a radio frequency switch, however, the radio frequency switch requires a certain buffering time during a switching process, and each time of switching results in power loss of the radio frequency switch. According to the embodiment of the present application, a switching gap between uplink transmission and downlink transmission in communication signal frames is used to transmit the sequence of sensing signals, thereby achieving efficient coexistence of communication and sensing without increasing the number of switching times of the radio frequency switch between uplink transmission and downlink transmission. Compared to a method of transforming a communication system to achieve integrated sensing and communication in the related art, the transmission method in the embodiment of the present application can achieve the integrated sensing and communication without adding a dedicated processing module for transmitting and receiving the sensing signal to the communication system, thereby lowering the requirements for hardware of the integrated sensing and communication.

In some cases, at least two OFDM symbols are involved in transmission of the sequence of sensing signals. It should be understood that in order to avoid a multipath effect in signal transmission, a receiver needs to receive the sequence of sensing signals in advance according to an advance parameter Nta in a time advanced command (TAC) during uplink reception. In a case where the receiver receives the sequence of sensing signals in advance, if the sequence of sensing signals is transmitted only by means of one OFDM symbol, the receiver can only receive the former half part of the sequence of sensing signals in the case of not changing its own reception timing. That is, the receiver receives less than one OFDM symbol length, which may result in the received latter half part of the sequence being possibly mixed with non-sensing signals, thereby affecting demodulation of the sensing signals. If the receiver changes its own timing to receive a complete sequence of sensing signals of one OFDM symbol length, transmission of subsequent communication signals is affected. Exemplarily, as shown in FIG. 5, if the receiver changes its own timing to make U'(0) align with D(n-1), U(0) of an implementation timing of the transmitter cannot be aligned with U(0) of an implementation timing of the receiver, which may result in the receiver needing to change its own timing multiple times to receive a complete sequence of communication signals. This has a significant impact on communication services in the communication system, increases the complexity of achieving integrated sensing and communication, and cannot achieve efficient coexistence of communication and sensing. According to the transmission method of the embodiments of the present application, the sequence of sensing signals is transmitted by means of the at least two first OFDM symbols, which can achieve transmission of the sensing signals without changing the timing of the receiver. The present application does not impose an upper limit on the number of the first OFDM symbols for transmitting the sequence of sensing signals, as long as there are at least two first OFDM symbols.

Optionally, the at least two first OFDM symbols mentioned above can be used for performing downlink transmission, or for performing switching between downlink transmission and uplink transmission, or partially used for downlink transmission and partially used for performing switching between downlink transmission and uplink transmission, which is not limited in the present application.

Optionally, the above signal sequence is a sequence for transmitting communication signals in the frame structure of the communication signals, and the frame structure of the communication signals may be a division duplexing (TDD) frame structure.

Optionally, the implementation timing of the transmitter takes the length of one OFDM symbol in the signal sequence as a unit.

Optionally, the above sensing signals may be modulated or demodulated using fast Fourier transform (FFT) or inverse fast Fourier transform (IFFT).

According to the sensing signal transmission method provided by the embodiments of the present application, the sequence of sensing signals is transmitted by means of the at least two first OFDM symbols in the signal sequence, wherein the at least two first OFDM symbols are prior to the second OFDM symbol in the signal sequence, and there is no second OFDM symbol between the at least two first OFDM symbols; the first OFDM symbols are used for performing downlink transmission or performing switching between downlink transmission and uplink transmission; and the second OFDM symbol is used for performing uplink reception. Thus, integrated sensing and communication can be achieved in the frame structure of communication signals. Therefore, integrated sensing and communication can be achieved without adding a dedicated processing module for transmitting and receiving the sensing signals to the communication system, thereby reducing the requirements for hardware of integrated sensing and communication. Moreover, according to the transmission method provided in the embodiment of the present application, a switching gap between uplink transmission and downlink transmission is utilized to transmit the sequence of sensing signals, thereby achieving efficient coexistence of communication and sensing without increasing the number of switching times of uplink transmission and downlink transmission in the frame structure of communication signals, namely, without increasing the switching overheads of the radio frequency switch.

In an implementation, a first reserved symbol position is reserved prior to the first OFDM symbols, and downlink scheduling is prohibited at the first reserved symbol position. It should be understood that the transmitter forcibly performs downlink scheduling at the above-mentioned first reserved symbol position, that is, the transmitter transmits the communication signals to user equipment (UE) prior to transmitting the sequence of sensing signals. If the receiver performs link processing, such as antenna calibration, with the OFDM symbol corresponding to the timing of the first reserved symbol position communication between the transmitter and the UE would interfere in link processing of the receiver, thereby affecting normal reception of the sequence of sensing signals by the receiver. In the embodiment of the present application, the first reserved symbol position is reserved prior to the first OFDM symbols, and downlink scheduling is prohibited at the first reserved symbol position, which can avoid the interference in link processing of the receiver and normal reception of the sequence of sensing signals caused by the transmitter forcibly performing downlink scheduling, thereby achieving normal reception of the sequence of sensing signals by the receiver, and thus achieving efficient coexistence of communication and sensing.

FIG. 3 shows another schematic flowchart of a sensing signal transmission method provided by embodiments of the present application. As shown in FIG. 3, the method may include the following steps.

At S201, a first symbol sequence is generated.

The first symbol sequence includes a pseudo-noise (PN) and a cyclic prefix (CP). The length of the first symbol sequence is the same as that of one OFDM symbol.

Optionally, the PN may be a longest linear feedback shift register sequence, namely an M sequence. The CP is used for reducing inter-channel interference (ICI) in a multipath channel environment and ensuring orthogonality between OFDM symbols.

As shown in FIG. 5, N(0) to N(n-i-1) and M(n-i) to M(n-1) are M sequences in the length of n respectively, and the M sequence contains effective data of sensing signals. A CP in the length of i is inserted prior to the M sequence. The content of the CP is the same as that of i sequence sample points in the lower bits of the M sequence, that is, it is the same as that of M(n-i) to M(n-1). In the present application, the i sequence sample points in the lower bits of the M sequence are replicated and transmitted as a prefix for a sequence of sensing signals, which can ensure that there is cyclic convolution between transmission signals and a channel response, so that a receiver captures energy of all delay components and achieves an effect of extending a sensing distance of the sensing signals.

At S202, cyclic shifting is performed on the first symbol sequence to obtain at least one second symbol sequence.

The phase of second symbol sequence and the phase of the first symbol sequence are continuous within OFDM symbols. In some cases, since the timing of the receiver is not changed according to the transmission method in the embodiment of the present application, the sequence of sensing signals received by the receiver crosses boundaries of the OFDM symbols. That is, the sequence of sensing signals received by the receiver includes a part of the first symbol sequence and a part of the second symbol sequence. If the phase of the second symbol sequence and the phase of the first symbol sequence are discontinuous within the OFDM symbols, phases of the sequence of sensing signals received by the receiver may also be discontinuous, which may affect the demodulation of the sensing signals. In this step, cyclic shifting is performed on the first symbol sequence to obtain the at least one second symbol sequence, so that the phase of the second symbol sequence and the phase of the first symbol sequence above are continuous within the OFDM symbols, thereby avoiding influence on demodulation of the sensing signals due to the fact that the phases of the sequence of sensing signals received by the receiver are discontinuous.

Exemplarily, performing cyclic shifting on the first symbol sequence includes: shifting lower bits of the M sequence in the first symbol sequence to high bits, such that a part originally in the higher bits of the M sequence is shifted to lower bits. For example, cyclic shifting is performed on a sequence with a length of 6, two bits are shifted each time, an original sequence is 111000, a sequence obtained after one time of cyclic shifting is 001110, a sequence obtained after two times of cyclic shifting is 100011, and a sequence obtained after three times of cyclic shifting is the same as the original sequence, which is 111000. A CP is inserted prior to the sequence obtained after cyclic shifting on the M sequence to obtain the second symbol sequence.

In an implementation, the length of sequence sample points by which cyclic shifting is performed in the first symbol sequence is the same as the length of the CP in the first symbol sequence. Exemplarily, as shown in FIG. 6, the second symbol sequence consists of four parts, where the three phase-continuous parts N(n-i) to N(n-i-1), M(0) to M(n-2i-1), and M(n-2i) to M(n-i-1) are a sequence obtained by performing cyclic shifting on the M sequence in the first symbol sequence by i sequence sample points, and M(n-2i) to M(n-i-1) in the highest bits is the CP of the second symbol sequence. The lowest bit of the second symbol sequence is M(n-i-1), and the highest bit of the first symbol sequence is M(n-i). The phase of the second symbol sequence and the phase of the first symbol sequence are continuous within the OFDM symbols. In this way, the phase of the second symbol sequence obtained by performing cyclic shifting on the first symbol sequence and the phase of the first symbol sequence may be continuous\.

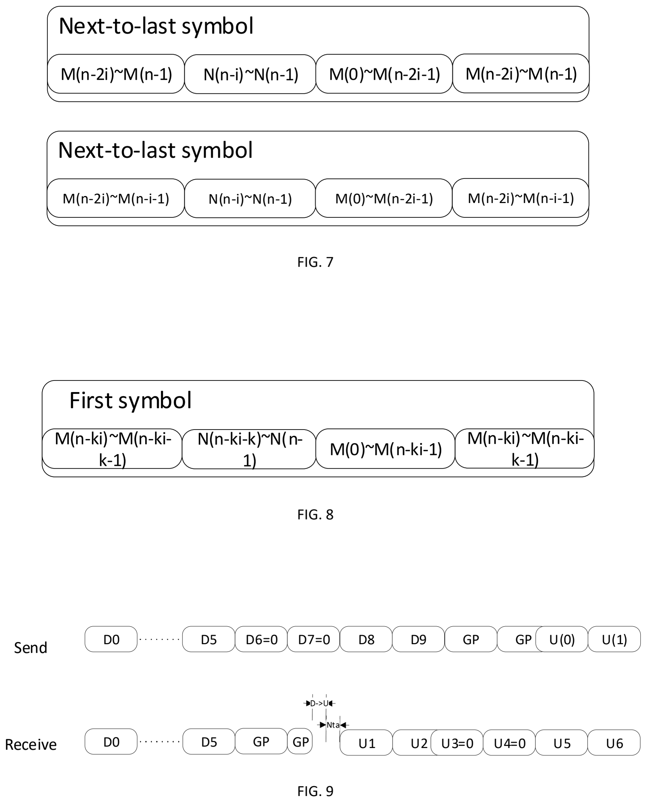

Optionally, multiple times of cyclic shifting is performed on the first symbol sequence above to obtain a plurality of second symbol sequences. The second symbol sequences obtained by performing k-1 times of cyclic shifting on the first symbol sequence may refer to FIG. 7. The phases of the plurality of second symbol sequences are continuous within the OFDM symbols.

At S203, the sequence of sensing signals is determined according to the second symbol sequence and the first symbol sequence.

In some cases, the first symbol sequence and at least one second symbol sequence are spliced to obtain the sequence of sensing signals. The length of the sequence of sensing signals equals the total length of the M sequences in the first symbol sequence and the at least one second symbol sequence, and the CP length of the sequence of sensing signals equals the total length of the CPs in the first symbol sequence and the at least one second symbol sequence. For example, the sequence of sensing signals consists of one first symbol sequence and k-1 second symbol sequences, the length of the sequence of sensing signals is k*n, and the CP length of the sensing signals is k*i. In this manner, the length of the CP is increased, and the sequence of sensing signals is allowed to adapt to longer transmission delay, and support a longer sensing distance.

Optionally, the sequence of sensing signals above does not limit parameters such as bandwidths and sampling rates. In order to improve the sensing distance resolution ability, a full carrier bandwidth may be used to generate the sequence of sensing signals above.

At S204, the sequence of sensing signals is transmitted by means of at least two first orthogonal frequency division multiplexing (OFDM) symbols in a signal sequence.

This step may refer to the explanation of step S101 in the embodiment of FIG. 1.

In an implementation, the at least two first OFDM symbols are consecutive first OFDM symbols in the signal sequence. Referring to FIG. 4 to FIG. 7, in a case where a position A corresponds to k OFDM symbols in FIG. 4, the first symbol sequence above is stored in the last OFDM symbol at the position A in FIG. 4, the lowest-bit symbol sequence of the at least one second symbol sequence above is stored in the next-to-last OFDM symbol at the position A, and the highest-bit symbol sequence of the at least one second symbol sequence above is stored in the first OFDM symbol at the position A. The sequence of sensing signals above is transmitted by means of the consecutive first OFDM symbols at the position A in the signal sequence.

According to the sensing signal transmission method provided by the embodiment of the present application, the first symbol sequence is generated, wherein the first symbol sequence includes the pseudo-noise (PN) and the cyclic prefix (CP); the length of the first symbol sequence is the same as that of one OFDM symbol; cyclic shifting is performed on the first symbol sequence to obtain the at least one second symbol sequence; the phase of the second symbol sequence and the phase of the first symbol sequence are continuous within the OFDM symbols; the sequence of sensing signals is determined according to the second symbol sequence and the first symbol sequence; and the sequence of sensing signals is transmitted by means of the at least two first OFDM symbols in the signal sequence. Thus, the sequence of sensing signals can be generated, and the sequence of sensing signals can adapt to the longer transmission delay, thereby supporting the longer sensing distance.

FIG. 4 shows another schematic flowchart of a sensing signal transmission method provided by embodiments of the present application. The method may be performed by a receiver. As shown in FIG. 4, the method may include the following steps.

At S301, a sequence of sensing signals from a transmitter is received by means of at least two second orthogonal frequency division multiplexing (OFDM) symbols in a signal sequence.

The at least two second OFDM symbols are located after a third OFDM symbol in the signal sequence; the third OFDM symbol is used for performing switching between downlink transmission and uplink transmission; and the second OFDM symbols are used for performing uplink reception.

In some cases, in order to avoid a multipath effect in signal transmission, the receiver needs to receive a sequence of sensing signals in advance according to an advance parameter Nta in a TAC during uplink reception. Therefore, symbol boundaries of transmission and reception implementation timing of the transmitter and the receiver cannot be aligned, and the sequence of sensing signals received by the receiver at this time does not correspond to one complete OFDM symbol boundary.

Referring to FIG. 5, when the receiver receives the sequence of sensing signals at the second OFDM symbol corresponding to a position A, due to the advance parameter Nta, U'(0) cannot align with D(n-1), and U'(0) cannot receive the complete sequence of sensing signals. Instead, U'(0) receives the complete sequence of sensing signals across the OFDM symbol boundary through U'(1). Therefore, the number of the second OFDM symbols used for receiving the sequence of sensing signals is at least two, so as to receive the sequence of sensing signals with one complete OFDM length.

According to the sensing signal transmission method provided by the embodiment of the present application, the sequence of sensing signals transmitted by the transmitter is received by means of the at least two second OFDM symbols in the signal sequence, wherein the at least two second OFDM symbols are located after the third OFDM symbol in the signal sequence; the third OFDM symbol is used for performing switching between downlink transmission and uplink transmission; and the second OFDM symbols are used for performing uplink reception. Therefore, integrated sensing and communication can be achieved in the frame structure of communication signals without adjusting a symbol boundary of a receiving timing of the receiver, thereby reducing the impact on communication services of a communication system and achieving efficient coexistence of the communication signals and the sensing signals.

In an implementation, prior to receiving the sequence of sensing signals, a second reserved symbol position is reserved after the second OFDM symbols, and uplink scheduling is prohibited at the second reserved symbol position. In some cases, prior to receiving the sequence of sensing signals, if the receiver forcibly performs uplink scheduling, an uplink signal transmitted by a communication terminal falls at a GP symbol position of the transmitter (a GP symbol corresponding to a position C in FIG. 5). If the transmitter performs link processing such as antenna calibration inside the system at the GP symbol, the uplink signal transmitted by the communication terminal would interfere in the link processing of the transmitter. According to the embodiment of the present application, the second reserved symbol position is reserved after the second OFDM symbols, and uplink scheduling is prohibited at the second reserved symbol position, which can avoid impact on normal switching of uplink transmission and downlink transmission at the transmitter due to the interference in the link processing of the transmitter caused by the receiver forcibly performing uplink scheduling, thereby achieving efficient coexistence of communication and sensing.

In an implementation, receiving the sequence of sensing signals transmitted by the transmitter includes that: the sequence of sensing signals from the transmitter is sampled at the second OFDM symbols; and sampling is stopped in a case where the length of a sampled sequence sample point is not less than the length of one OFDM symbol, wherein the sampled sequence sample point includes the sequence of sensing signals. This method starts sampling at a sampling point in any second OFDM symbol, and can receive the sequence of sensing signals with one complete OFDM length without adjusting the symbol boundary on the signal sequence at the receiver.

In an implementation, prior to receiving the sequence of sensing signals from the transmitter by means the at least two second OFDM symbols in the signal sequence, the method further includes that: the OFDM symbols in the signal sequence are allocated, such that the second OFDM symbols are used for performing uplink reception in the signal sequence. In some cases, in some communication systems, the timing of the transmitter is consistent with that of the receiver. To enable the receiver to synchronously receive the sequence of sensing signals from the transmitter, the OFDM symbols of the signal timing of the receiver needs to be reallocated in the embodiment of the present application, so that the second OFDM symbols are used for performing uplink reception in the signal sequence.

The sensing signal transmission method provided by the embodiment of the present application is illustrated below through specific embodiments.

The embodiments of the present application may be applied to a dual-base-station communication system shown in FIG. 1a. FIG. 9 shows a schematic diagram of transmitting a sequence of sensing signals in a dual-base-station sensing system according to embodiments of the present application. According to FIG. 9, in the 4.9G frequency networking, both a transmitter and a receiver transmit a sequence of sensing signals by using a slot structure ratio of a 2.5ms dual-period frame.

For the transmitter, a ratio of a first OFDM symbol, a third OFDM symbol, and a second OFDM symbol (i.e. symbol D, symbol G, and symbol U in FIG. 9) in a special slot is 10:2:2. The receiver needs to allocate the OFDM symbols in the special slot, so that a ratio of the symbol D, the symbol G, and the symbol U in the special slot is 6:2:6. Further, the receiver can achieve uplink reception of the sequence of sensing signals at the OFDM symbols corresponding to the timing for transmitting the sequence of sensing signals.

In some cases, the transmitter transmits the sequence of sensing signals at symbols D8 and D9, while symbols D6 and D7 restrict the transmitter from downlink scheduling to avoid interference in the receiver. The receiver receives the sequence of sensing signals at symbols U1 and U2, and restricts the receiver from uplink scheduling at symbols U3 and U4 to avoid interference in the transmitter. The receiver intercepts a sequence sample point, whose length equal the length of one OFDM symbol length, from a sampling point between the symbol U1 and the symbol U2, and may obtain a sequence of sensing signals in the length of n+i sample points.

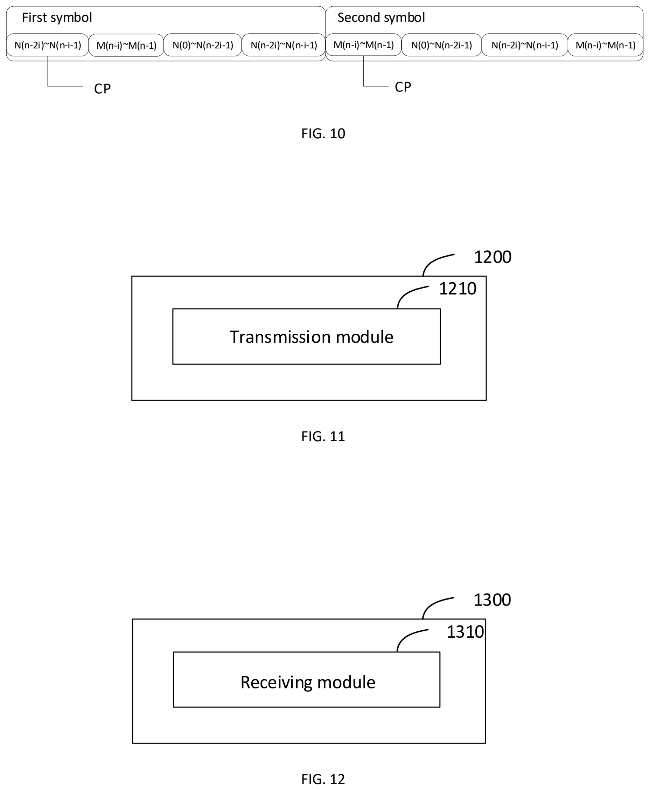

The transmission of the sequence of sensing signals in FIG. 9 occupies two OFDM symbols. The sequence of sensing signals may refer to FIG. 10, where the first symbol sequence is located at a second symbol, and a second symbol sequence obtained by performing cyclic shifting on the first symbol sequence is located at a first symbol. The above symbol sequence may be generated in a frequency domain or a time domain.

According to the sensing signal transmission method provided by the embodiment of the present application, the sensing signal transmission method is applied to the dual-base-station sensing system, the sequence of sensing signals can be transmitted by using a switching gap between uplink transmission and downlink transmission in the communication signal frame, without modification of the dual-base-station sensing system. This reduces the requirements for hardware of integrated sensing and communication and the scheduling impact on communication services of the dual-base-station sensing system, and achieves efficient coexistence of communication and sensing.

The embodiment of the present application may be applied to a single-base-station communication system shown in FIG. 1b. Part of antenna channels of a base station A are used for providing normal communication services and transmitting sensing signals, while the other part of antenna channels are used for providing normal communication services and receiving sensing signals.

Taking transmission of a sequence of sensing signals by using a slot structure ratio of a 2.5ms dual-period frame at a transmitter and a receiver in 4.9G frequency networking as an example, when transmitting the sequence of sensing signals, a transmitting antenna follows a sending timing in FIG. 9. When receiving the sequence of sensing signals, a receiving antenna follows a receiving timing in FIG. 9. The receiving antenna also needs to allocate OFDM symbols in a special slot, so that a ratio of a first OFDM symbol, a third OFDM symbol, and a second OFDM symbol (i.e., symbol D, symbol G, and symbol U in FIG. 9) in the special slot is 6:2:6.

Optionally, for a single-base-station sensing system, the transmitting antenna and the receiving antenna are on the same antenna mask, and the sensing signals need to be transmitted and received simultaneously. Therefore, there needs to be sufficient isolation of the transmitting antenna from the receiving antenna, otherwise it will interfere in demodulation of the sensing signals.

According to the sensing signal transmission method provided by the embodiment of the present application, the sensing signal transmission method is applied to the single-base-station sensing system, the sequence of sensing signals can be transmitted using a switching gap between uplink transmission and downlink transmission in a communication signal frame, without modification of the single-base-station sensing system. This reduces the requirements for hardware of integrated sensing and communication and the scheduling impact on communication services of the dual-base-station sensing system, and achieves efficient coexistence of communication and sensing.

FIG. 11 shows a schematic structural diagram of a sensing signal transmission apparatus 1200 provided by embodiments of the present application. The sensing signal transmission apparatus in the embodiment of the present application may be an electronic device, such as an electronic device with an operating system, or a component in the electronic device, such as an integrated circuit or a chip. As shown in FIG. 11, the apparatus may include: a transmission module 1210.

The transmission module 1210 is configured to transmit a sequence of sensing signals by means at least two first orthogonal frequency division multiplexing (OFDM) symbols in a signal sequence, wherein the at least two first OFDM symbols are prior to a second OFDM symbol in the signal sequence, and there is no second OFDM symbol between the at least two first OFDM symbols; the first OFDM symbols are used for performing downlink transmission or performing switching between downlink transmission and uplink transmission; and the second OFDM symbol is used for performing uplink reception.

In an implementation, the transmission module 1210 is further configured to prior to transmitting the sequence of sensing signals, reserve a first reserved symbol position prior to the first OFDM symbols, downlink scheduling being prohibited at the first reserved symbol position.

In an implementation, the transmission module 1210 is further configured to generate a first symbol sequence, wherein the first symbol sequence includes a pseudo-noise (PN) and a cyclic prefix (CP), and the length of the first symbol sequence is the same as that of one OFDM symbol; perform cyclic shifting on the first symbol sequence to obtain at least one second symbol sequence; wherein the phase of the second symbol sequence and the phase of the first symbol sequence are continuous within OFDM symbols; and determine the sequence of sensing signals according to the second symbol sequence and the first symbol sequence.

In an implementation, the length of sequence sample point by which cyclic shifting is performed of the first symbol sequence is the same as the length of the CP in the first symbol sequence.

In an implementation, the at least two first OFDM symbols are consecutive first OFDM symbols in the signal sequence.

The sensing signal transmission apparatus 1200 implements the sensing signal transmission method described in the embodiments of FIG. 2 and FIG. 3.

FIG. 12 shows a schematic structural diagram of another sensing signal transmission apparatus 1300 provided by embodiments of the present application. As shown in FIG. 12, the apparatus may include a receiving module 1310.

The receiving module 1310 is configured to receive a sequence of sensing signals from a transmitter by means of at least two second orthogonal frequency division multiplexing (OFDM) symbols in a signal sequence, wherein the at least two second OFDM symbols are located after a third OFDM symbol in the signal sequence; the third OFDM symbol is used for performing switching between downlink transmission and uplink transmission; and the second OFDM symbols are used for performing uplink reception.

In an implementation, the receiving module 1310 is further configured to prior to receiving the sequence of sensing signals, reserve a second reserved symbol position located after the second OFDM symbols, uplink scheduling being prohibited at the second reserved symbol position.

In an implementation, the receiving module 1310 is further configured to sample, at the second OFDM symbols, the sequence of sensing signals from the transmitter; and stop sampling in a case where a length of a sampled sequence sample point is not less than a length of one OFDM symbol, wherein the sampled sequence sample point includes the sequence of sensing signals.

In an implementation, the apparatus further includes an allocating module, configured to allocate OFDM symbols in the signal sequence prior to receiving the sequence of sensing signals transmitted by the transmitter via the at least two second OFDM symbols in the signal sequence, such that the second OFDM symbols are used for performing uplink reception in the signal sequence.

The sensing signal transmission apparatus 1300 implements the sensing signal transmission method described in the embodiment of FIG. 4.

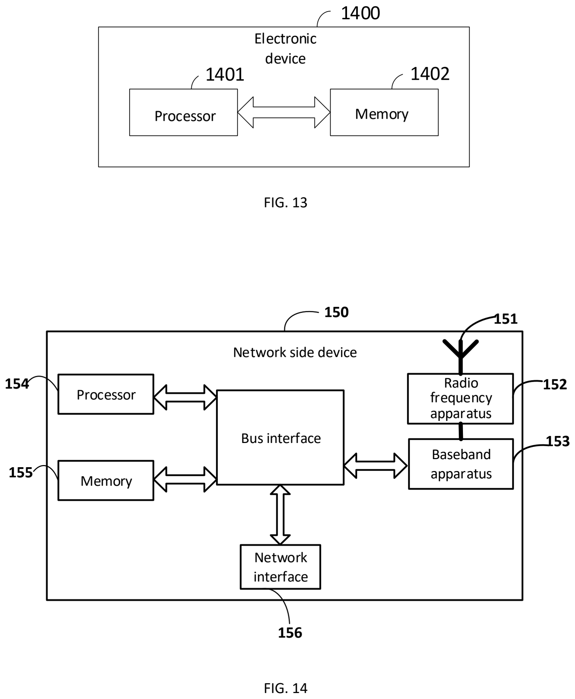

Optionally, as shown in FIG. 13, an embodiment of the present application further provides an electronic device 1400, including a processor 1401, a memory 1402, and a program or instruction stored on the memory 1402 and runnable on the processor 1401. The program or the instruction, when executed by the processor 1401, implements the sensing signal transmission method described in at least one of the embodiments of FIG. 2 to FIG. 4. It should be noted that the electronic device in the embodiment of the present application includes: a server, or other devices other than a terminal device.

The above electronic device structure does not constitute a limitation on the electronic device. The electronic device may include more or fewer components than shown in the diagram, or combine certain components, or arrange different components. For example, an input unit may include a graphics processing unit (GPU) and a microphone, and a display unit may be configured with a display panel in a form of a liquid crystal display, an organic light-emitting diode, and the like. The user input unit includes at least one of a touch panel or other input devices. The touch panel is also known as a touch screen. Other input devices may include, but are not limited to, a physical keyboard, a functional key (such as a volume control key or a switch key), a track ball, a mouse, and a joystick, which are not repeated here.

The memory may be configured to store a software program and various data. The memory may mainly include a first storage area for storing a program or an instruction and a second storage area for storing data. The first storage area may store an operating system, an application program or instruction required by at least one function (such as a sound playback function and an image display function), and the like. In addition, the memory may include a volatile memory or a non-volatile memory, or the memory may include both the volatile memory and the non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM), a static RAM (SRAM), a dynamic RAM (DRAM), a synchronous DRAM (SDRAM), a double data rate SDRAM (DDRSDRAM), an enhanced SDRAM (ESDRAM), a synch link DRAM (SLDRAM), and a direct rambus RAM (DRRAM).

The processor may include one or more processing units. Optionally, the processor integrates an application processor and a modem processor, wherein the application processor mainly processes operations related to an operating system, a user interface, an application program and the like, and the modem processor mainly processes a communication signal, such as a baseband processor. It may be understood that the above modem processor may also not be integrated in the processor.

An embodiment of the present application further provides a network side device, including a processor and a communication interface, the communication interface is coupled with the processor, and the processor is used for running a program or an instruction to implement the steps of the method embodiments shown in FIG. 2 to FIG. 4. The network side device embodiment corresponds to the above method embodiment on the network side device. Various implementation processes and implementations of the above method embodiments may be applied to the network side device embodiment and can achieve the same technical effect.

In some cases, an embodiment of the present application further provides a network side device. As shown in FIG. 14, the network side device 150 includes: an antenna 151, a radio frequency apparatus 152, a baseband apparatus 153, a processor 154, and a memory 155. The antenna 151 is connected with the radio frequency apparatus 152. In an uplink direction, the radio frequency apparatus 152 receives information through the antenna 151 and sends the received information to the baseband apparatus 153 for processing. In a downlink direction, the baseband apparatus 153 processes the information to be sent and sends the same to the radio frequency apparatus 152. The radio frequency apparatus 152 processes the received information and sends the same out through the antenna 151.

The method executed by the network side device in the above embodiment may be implemented in the baseband apparatus 153, and the baseband apparatus 153 includes a baseband processor.

The baseband apparatus 153 may, for example, include at least one baseband board, a plurality of chips are arranged on the baseband board, and as shown in FIG. 14, one of the chips, for example, is the baseband processor, which is connected with the memory 155 through a bus interface to call a program in the memory 155 and execute a network device operation shown in the above method embodiment.

The network side device may further include a network interface 156, and the interface is, for example, a common public radio interface (CPRI).

In some cases, the network side device 150 in the embodiment of the present application further includes an instruction or a program stored on the memory 155 and runnable on the processor 154, and the processor 154 calls the instruction or the program in the memory 155 to execute the method executed by each module shown in FIG. 2 to FIG. 4, and achieves the same technical effect, which will be omitted here to avoid repetitions.

An embodiment of the present application further provides a readable storage medium, the readable storage medium has a program or instruction stored thereon, and the program or the instruction, when executed by a processor, implements the sensing signal transmission method described in at least one of the embodiments in FIG. 2 to FIG. 4, and can achieve the same technical effects, which is omitted here to avoid repetitions.

The processor is a processor in the electronic device in the above embodiment. The readable storage medium includes a computer-readable storage medium, such as a computer read-only memory (ROM), a random access memory (RAM), a magnetic disk, or an optical disc. In some examples, the readable storage medium may be a non-transient readable storage medium.

An embodiment of the present application additionally provides a chip, the chip includes a processor and a communication interface, the communication interface is coupled with the processor, and the processor is used for running a program or an instruction to implement various processes of the sensing signal transmission method described in at least one of the embodiments in FIG. 2 to FIG. 4 and can achieve the same technical effects, which is omitted here to avoid repetitions.

It should be understood that the chip mentioned in the embodiment of the present application may further be referred to as a system-level chip, a system chip, a chip system, or a system on chip.

It should be noted that terms "including," "containing", or any other variations herein are intended to cover non-exclusive inclusion, such that a process, method, item or apparatus that includes a series of elements not only includes those elements, but also other elements that are not explicitly listed, or further include elements inherent in such the process, method, item or apparatus. Without more limitations, elements defined by a statement "including one" do not exclude the existence of other identical elements in the process, method, item or apparatus that includes the said elements. In addition, it is to be pointed out that the scope of the methods and apparatuses in the implementations of the present application is not limited to performing functions in an order shown or discussed, but may further include performing functions in a substantially simultaneous mode or in an opposite order according to the involved functions. For example, the described methods may be executed in a different order from the described ones, and various steps may also be added, omitted, or combined. In addition, features described with reference to certain examples may be combined in other examples.

According to the descriptions in the foregoing implementations, those skilled in the art may clearly learn that the method according to the above embodiment may be implemented by relying on software and a commodity hardware platform or by using hardware. However, in many cases, the former is the better implementation. Based on such an understanding, the technical solutions of the present application essentially, or the part contributing to the prior art, may be presented in the form of a computer software product. The computer software product is stored in a storage medium (such as an ROM/RAM, a magnetic disk, or an optical disc) including several instructions to enable a network side device to execute the sensing signal transmission method described in all the embodiments of the present application.

The embodiments of the present application have been described above with reference to the accompanying drawings. However, the present application is not limited to the above specific implementations, and the above specific implementations are merely exemplary and not limitative. Those of ordinary skill in the art may make various variations under the teaching of the present application without departing from the spirit of the present application and the protection scope of the claims, and such variations shall all fall within the protection scope of the present application.

## Claims

1. A sensing signal transmission method, performed by a transmitter, comprising:
transmitting a sequence of sensing signals by means of at least two first orthogonal frequency division multiplexing (called OFDM symbols in a signal sequence, wherein the at least two first OFDM symbols are prior to a second OFDM symbol in the signal sequence, and there is no second OFDM symbol between the at least two first OFDM symbols;
the first OFDM symbols being used for performing downlink transmission or performing switching between downlink transmission and uplink transmission; and
the second OFDM symbol being used for performing uplink reception.

2. The transmission method according to claim 1, wherein prior to transmitting the sequence of sensing signals, the method further comprises:
reserving a first reserved symbol position prior to the first OFDM symbols, downlink scheduling being prohibited at the first reserved symbol position.

3. The transmission method according to claim 1, wherein prior to transmitting the sequence of sensing signals, the method further comprises:
generating a first symbol sequence, wherein the first symbol sequence comprises a pseudo-noise called PN and a cyclic prefix called CP; and a length of the first symbol sequence is the same as a length of one OFDM symbol;
performing cyclic shifting on the first symbol sequence to obtain at least one second symbol sequence; wherein a phase of the second symbol sequence and a phase of the first symbol sequence are continuous within OFDM symbols; and
determining the sequence of sensing signals according to the second symbol sequence and the first symbol sequence.

4. The transmission method according to claim 3, wherein a length of sequence sample points by which cyclic shifting is performed in the first symbol sequence is the same as a length of the CP in the first symbol sequence.

5. The transmission method according to claim 1, wherein the at least two first OFDM symbols are consecutive first OFDM symbols in the signal sequence.

6. A sensing signal transmission method, performed by a receiver, comprising:
receiving a sequence of sensing signals from a transmitter by means of at least two second orthogonal frequency division multiplexing called OFDM symbols in a signal sequence, wherein the at least two second OFDM symbols are located after a third OFDM symbol in the signal sequence;
the third OFDM symbol being used for performing switching between downlink transmission and uplink transmission; and
the second OFDM symbols being used for performing uplink reception.

7. The transmission method according to claim 6, wherein prior to receiving the sequence of sensing signals, the method further comprises:
reserving a second reserved symbol position after the second OFDM symbols, uplink scheduling being prohibited at the second reserved symbol position.

8. The transmission method according to claim 6, wherein receiving the sequence of sensing signals transmitted by the transmitter comprises:
sampling, at the second OFDM symbols, the sequence of sensing signals from the transmitter; and
stopping sampling in a case where a length of a sampled sequence sample point is not less than a length of one OFDM symbol, wherein the sampled sequence sample point comprises the sequence of sensing signals.

9. The transmission method according to claim 6, wherein prior to receiving the sequence of sensing signals from the transmitter by means of the at least two second OFDM symbols in the signal sequence, the method further comprises:
allocating OFDM symbols in the signal sequence, such that the second OFDM symbols are used for performing uplink reception in the signal sequence.

10. An electronic device, comprising a processor, a memory, and a program or instruction stored on the memory and runnable on the processor, wherein the program or the instruction, when executed by the processor, implements the steps of the sensing signal transmission method according to any one of claims 1 to 5, or the steps of the sensing signal transmission method according to any one of claims 6 to 9.

11. A readable storage medium, wherein the readable storage medium stores a program or an instruction thereon, and the program or the instruction, when executed by a processor, implements the steps of the sensing signal transmission method according to any one of claims 1 to 5, or the steps of the sensing signal transmission method according to any one of claims 6 to 9.
